# EUROPÄISCHE PATENTSCHRIFT

(11) **EP 1 232 216 B1**
(45) Veröffentlichungstag und Bekanntmachung des Hinweises auf die Patenterteilung: **22.11.2006**
(21) Anmeldenummer: 00975924.2
(22) Anmeldetag: 26.10.2000
(51) Int. Cl.: C08L 69/00, C08L 67/02

(54) **ZUSAMMENSETZUNGEN AUF BASIS SCHLAGZÄHMODIFIZIERTEN POLYETHYLENTEREPHTHALAT/POLYCARBONAT BLENDS**
COMPOSITIONS BASED ON SHOCK RESISTANCE-MODIFIED POLYETHYLENETEREPHTHALATE/POLYCARBONATE BLENDS
COMPOSITIONS SE BASANT SUR DES MELANGES POLYETHYLENE TEREPHTHALATE/POLYCARBONATE A RESILIENCE MODIFIEE

(30) Priorität: 08.11.1999 DE 19953545; 31.03.2000 DE 10016190
(43) Veröffentlichungstag der Anmeldung: 21.08.2002
(73) Patentinhaber: LANXESS Deutschland GmbH, 51369 Leverkusen (DE)
(72) Erfinder: BIENMÜLLER, Matthias, 47803 Krefeld (DE); IDEL, Karsten-Josef, 47802 Krefeld (DE); KRÜGER, Peter, 51467 Bergisch Gladbach (DE); PAUL, Friedemann, 51469 Bergisch Gladbach (DE)
(86) Internationale Anmeldenummer: PCT/EP2000/010549
(87) Internationale Veröffentlichungsnummer: WO 2001/034703

(56) Entgegenhaltungen:
- EP-A- 0 133 236
- EP-A- 0 709 432
- PATENT ABSTRACTS OF JAPAN vol. 11, no. 242 (C-438), 7. August 1987 (1987-08-07) & JP 62 048760 A (NISSAN MOTOR CO LTD), 3. März 1987 (1987-03-03) & DATABASE WPI Week 198714 Derwent Publications Ltd., London, GB; AN 1987-099153
- PATENT ABSTRACTS OF JAPAN vol. 1995, no. 01, 28. Februar 1995 (1995-02-28) & JP 06 293859 A (DENKI KAGAKU KOGYO KK), 21. Oktober 1994 (1994-10-21) & DATABASE WPI Week 199502 Derwent Publications Ltd., London, GB; AN 1995-009675
- PATENT ABSTRACTS OF JAPAN vol. 18, no. 686 (C-1292), 26. Dezember 1994 (1994-12-26) & JP 06 271754 A (MITSUBISHI KASEI CORP), 27. September 1994 (1994-09-27) & DATABASE WPI Week 199443 Derwent Publications Ltd., London, GB; AN 1994-347269

## Beschreibung

Die vorliegende Erfindung betrifft Zusammensetzungen auf Basis schlagzähmodifizierten Polyethylenterephthalat/Polycarbonat-Blends die als mineralischen Füllstoff Talk enthalten. Darüber hinaus betrifft die vorliegende Erfindung die Verwendung der thermoplastischen Formmassen zur Herstellung von Halbzeugen und Formteilen, sowie die aus den thermoplastischen Formmassen erhältlichen Halbzeuge und Formteile.

Füllstoffhaltige Polycarbonatformmassen, die teilkristalline Polyester, Pfropfcopolymerisate und mineralische Füllstoffe enthalten, sind bekannt. Derartige Formmassen werden zum Beispiel im Automobilsektor eingesetzt.

In der DE-A 19 753 541 werden Polycarbonatformmassen, die teilaromatische Polyester, Pfropfcopolymerisate und mineralische Füllstoffe enthalten, offenbart, die eine für Karosserieaußenteile ausreichende Zähigkeit, aufweisen. Jedoch zeigen die beanspruchten Formmassen unzureichende Wärmeformbeständigkeiten auf.

In EP-A 135 904 werden Polycarbonatformmassen, die Polyethylenterephthalat, Pfropfcopolymerisate auf Polybutadien-Basis und Talk einer Menge bis zu 4 Gew.-% enthalten, beschrieben. Als Vorteil wird eine günstige Eigenschaftskombination aus geringem Verzug ("warpage") und guter Zähigkeit offentbart.

In JP-A 08 176 339 werden Polycarbonatformmassen, die Talk als mineralischen Füllstoff enthalten, beschrieben. ABS-Harze, Polyethylenterephthalat und Polybutylenterephthalat können als weitere Blendpartner eingesetzt werden. Als Vorteil der Formmassen werden gute Schlagzähigkeit und Oberflächenqualität herausgestellt.

In JP-A 07 025 241 werden Polycarbonatformmassen beschrieben, die eine hohe Steifigkeit und gute Oberflächenqualität aufweisen. Die Formmassen enthalten 60 bis 70 Gew.-% Polycarbonat, 20 bis 30 Gew.-% Polyester, 5 bis 10 Gew.-% Acrylatkautschuk und 5 bis 10 Gew.-% Talk sowie 0,1 bis 1 Gew.-Teil (bezogen auf 100 Teile Polymer-Komponenten) Antioxidans. JP-A 63 132 961 offenbart Polycarbonatformmassen, die Polybutylenterephthalat, Polyester, Pfropfcopolymerisate und mineralische Füllstoffe enthalten, für Anwendungen im Automobilbereich. EP-A 0 709 432 offenbart Zusammensetzungen aus Polycarbonat, Polyethylenterephthalat, Talk und einem Pfropfpolymerisat. JP-A 06 293 859 beschreibt Zusammensetzungen aus Polyester, Polycarbonaten, anorganischen Nukleierungsreagenzien und einem Pfropfpolymerisat.
Karosserieaußenteile aus Kunststoffen müssen in der Regel lackiert werden. Im Falle wagenfarbig eingefärbter Kunststoffe werden die daraus hergestellten Karosserieanbauteile in der Regel mit einer oder mehreren Schichten durchsichtiger Lacke überzogen. Im Falle nicht wagenfarbig eingefärbter Kunststoffe werden die daraus hergestellten Karosserieanbauteile mit mehreren Lackschichten lackiert, wobei mindestens eine der Schichten farbgebend ist. Die aufgetragenen Lackschichten müssen in der Regel bei erhöhter Temperatur eingebrannt und ausgehärtet werden. Die dafür benötigte Temperatur, die bis zu 200°C betragen kann, und Dauer sind abhängig von den verwendeten Lacksystemen. Das Kunststoffmaterial der Karosserieanbauteile darf während dem Aushärt- bzw. Einbrennvorgang möglichst keine Veränderungen, wie z.B. irreversible Verformungen, aufzeigen. Daher ist es erforderlich, thermoplastische Polycarbonatformmassen mit verbesserter Wärmeformbeständigkeit bereitzustellen.
Weitere Anforderungen, die an Karosserieanbauteile aus Kunststoffen gestellt werden, sind gute Zähigkeit bei Schlag- und Zugbelastung, insbesondere auch bei tiefen Temperaturen, ausreichende Steifigkeit, geringe thermische Ausdehnung, gute Oberflächenqualität, gute Lackierbarkeit mit guter Lackhaftung und gute Chemikalien- und Kraftstoffbeständigkeit. Die zur Herstellung der Karosserieaußenteile verwendeten Formmassen müssen zudem eine gute Fließfähigkeit in der Schmelze aufweisen.

Die Erfahrung aus der Praxis zeigt, dass für Karosserieanbauteile eingesetzte Materialien je nach konkretem Einsatzgebiet große Variationen in den aufgezählten Eigenschaften aufweisen können. Letztendlich entscheidend und sehr wichtig bei allen Materialien ist jedoch eine ausreichende Wärmeformbeständigkeit, um eine problemlose Lackierung zu ermöglichen.

Aufgabe der vorliegenden Erfindung war es daher, Polycarbonatformmassen zur Verfügung zu stellen, die eine ausgezeichnete Wärmeformbeständigkeit und Lackierbarkeit aufweisen. Die erfindungsgemäßen Zusammensetzungen weisen zusätzlich einen unerwartet niedrigen Abfall der Schlagzähigkeit bei tiefen Temperaturen auf. Weiterhin sollten die Polycarbonatformmassen ein ausgezeichnetes Gesamteigenschaftsprofil für Karosserieanbauteile aus Kunststoffen in Bezug auf die im Abschnitt vorher genannte Anforderungen aufweisen. Die Polycarbonatformmassen sollten sich zudem leicht zu großteiligen Formteilen verarbeiten lassen, die für den Einsatz als Karosserieanbauteile geeignet sind.

Es wurde nun gefunden, dass Zusammensetzungen enthaltend Polyethylenterephthalat in Kombination mit Polycarbonat, Schlagzähmodifikatoren und Talk als mineralischen Füllstoff die geforderten Eigenschaften aufweisen.

Die vorliegende Erfindung betrifft Zusammensetzungen, enthaltend
A) 4 bis 80, vorzugsweise größer 10 bis 60, besonders bevorzugt 12 bis 40, insbesondere 19 bis 29 Gew.-Teile, mindestens ein Polyethylenterephthalat,
B) 10 bis 90, vorzugsweise 20 bis 80, besonders bevorzugt 25 bis 55, insbesondere 30 bis 50 Gew.-Teile, mindestens ein aromatisches Polycarbonat,
C) 1,5 bis 30, vorzugsweise 3 bis 25, besonders bevorzugt 6 bis 20, insbesondere 8 bis 17 Gew.-Teile, mindestens ein Pfropfpolymerisat mit einer Pfropfgrundlage auf Basis von Acrylaten mit einer Glasübergangstemperatur von unter -5°C oder mindestens ein elastomeres Blockpolymer, insbesondere Zwei- oder Dreiblockcopolymere auf Basis von Vinylaromaten und Dienen, oder Mischungen hieraus,
D) 1,5 bis 54, vorzugsweise 3 bis 34, besonders bevorzugt 6 bis 25, insbesondere 8 bis 21 Gew.-Teile, mindestens einen mineralischen Füllstoff auf Basis von Talk mit einer oberen Korngröße d₉₇ kleiner 50 µm,
wobei die Summe der Gewichtsteile aller Komponenten 100 ergibt.

Als **Komponente A** enthalten die Zusammensetzungen erfindungsgemäß ein oder eine Mischung aus zwei oder mehr unterschiedlichen Polyethylenterephthalaten. Polyethylenterephthalate im Sinne der Erfindung sind Polyalkylenterephthalate, die sich von Terephthalsäure (oder ihren reaktionsfähigen Derivaten) und Alkandiolen auf Basis von Ethylenglykol ableiten.

Bevorzugte Polyethylenterephthalate (im folgenden auch abgekürzt: PET) lassen sich aus Terephthalsäure (oder ihren reaktionsfähigen Derivaten) und aliphatischen oder cycloaliphatischen Diolen mit Ethylenglycoleinheit nach bekannten Methoden herstellen (Kunststoff-Handbuch, Bd. VIII, S. 695 FF, Karl-Hanser-Verlag, München 1973).

Bevorzugte Polyethylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykolreste.

Die bevorzugten Polyethylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, vorzugsweise Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyethylenterephthalate können neben Ethylenglykol bis zu 20 Mol.-% anderer aliphatischer Diole mit 3 bis 12 C-Atomen oder cycloaliphatischer Diole mit 6 bis 21 C-Atomen enthalten, z.B. Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932). Polyethylenterephthalate können weiterhin auch bis zu 20 Mol.-% Ether- bzw. Polyetherstrukturen enthalten.

Die Polyethylenterephthalate können durch Einbau relativ kleiner Mengen 3- oder 4- wertiger Alkohole oder 3- oder 4-basischer Carbonsäure, wie sie z.B. in der DE-A 19 00 270 und der US-A 3 692 744 beschrieben sind, verzweigt werden. Beispiele bevorzugter Verzweigungsmittel sind Trimesinsäure, Trimellitsäure, Trimethylolethan und -propan und Pentaerythrit. Es ist ratsam, nicht mehr als 1 Mol.-% des Verzweigungsmittels, bezogen auf die Säurekomponente, zu verwenden.

Bevorzugte Polyethylenterephthalate sind auch Copolyester, die aus mindestens zwei Säurekomponenten und/oder aus mindestens zwei Alkoholkomponenten hergestellt sind, besonders bevorzugte Copolyester sind Poly-(ethylenglykol/butandiol-1,4)-terephthalate.

Besonders bevorzugt sind Polyethylenterephthalate, die allein aus Terephthalsäure und deren reaktionsfähigen Derivaten (z.B. deren Dialkylestem) und Ethylenglykol hergestellt worden sind.

Die Polyethylenterephthalate besitzen im allgemeinen eine Intrinsic-Viskosität von ca. 0,3 bis 1,5 dl/g, bevorzugt 0,4 bis 1,3 dl/g, insbesondere bevorzugt 0,5 bis 0,8 dl/g, jeweils gemessen in Phenol/o-Dichlorbenzol (1:1 Gew.-Teile) bei 25°C.

Besonders bevorzugt sind schnell kristallisierende Polyethylcnterephthalate, dass heißt Polyethylenterephthalate, die nach der DSC-Methode für isotherme Kristallisation bei 215°C Kristallisationszeiten im allgemeinen kleiner 15 Minuten, bevorzugt von kleiner 10 Minuten und besonders bevorzugt von kleiner 5 Minuten aufweisen.

Eine schnelle Kristallisation der erfindungsgemäßen Polyethylenterephthalate wird bevorzugt durch Zusatz von Kristallisationsmitteln zum Polyethylenterephthalat bei dessen Herstellung oder im Anschluss z.B. durch Einmischen in die Polyethylenterephthalat-Schmelze erreicht. Als Kristallisationsmittel werden bevorzugt Metallsalze organischer Carbonsäuren verwendet, wie z.B. Alkali- oder Erdalkalimetallsalze der Benzoesäure oder substituierten Benzoesäure.

Ein Teil des Polyethylenterephthalates kann durch andere thermoplastische Polyester, bevorzugt Polybutylenterephthalat ersetzt werden. Im allgemeinen kommen bis zu 50 Gew.-%, vorzugsweise bis zu 10, bezogen auf Polyethylenterephthalat) Polyethylenterephthalat durch andere thermoplastische Polyester, bevorzugt Polyalkylenterephthalate, ersetzt werden.

Thermoplastische Polyester sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte weitere thermoplastische Polyester stellen Polyalkylenterephthalate dar, die sich aus Terephthalsäure (oder ihren reaktionsfähigen Derivaten) und aliphatischen oder cycloaliphatischen Diolen mit 3 bis 10 C-Atomen nach bekannten Methoden herstellen lassen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Butandiol-1,4-Reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können - wie oben bereits beschrieben ist - ebenfalls durch Einbau relativ kleiner Mengen 3- oder 4-wertiger Alkohole oder 3- oder 4- basischer Carbonsäure, verzweigt werden.

Besonders bevorzugt sind Polyalkylenterephthalate, die allein aus Terephthalsäure und deren reaktionsfähigen Derivaten (z.B. deren Dialkylestem) und Butandiol-1,4 hergestellt worden sind (Polybutylentherephthalat).

Bevorzugte Polyalkylenterephthalate sind auch Copolyester, die aus mindestens zwei der oben genannten Säurekomponenten und/oder aus mindestens zwei der oben genannten Alkoholkomponenten hergestellt sind.

Die Polyalkylenterephthalate besitzen im allgemeinen eine Intrisic-Viskosität von ca. 0,3 bis 1,5 dl/g, vorzugsweise 0,4 bis 1,3 dl/g, jeweils gemessen in Phenol/o-Dichlorbenzol (1:1 Gew.-Teile) bei 25°C.

Als **Komponente B** enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 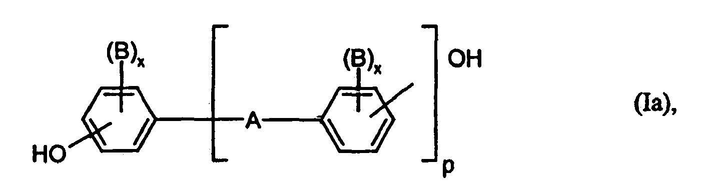 wobei
- A: eine Einfachbindung, C₁-C₅-Alkylen, C₂-C₅-Alkyliden, C₅-C₆-Cycloalkyliden, -O-, SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 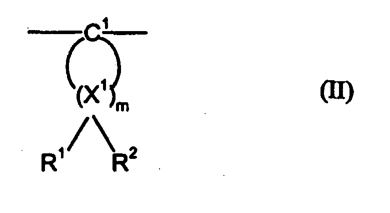 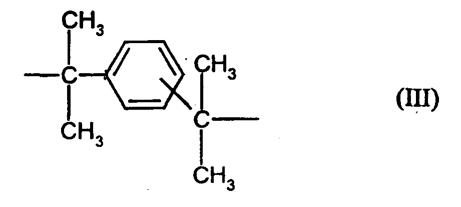
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenylethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern 62039/1986, 62040/1986 und 105550/1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{W}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher ,eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α''-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (M̅_{W}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 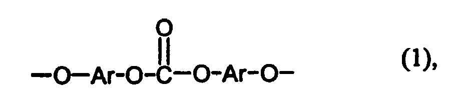 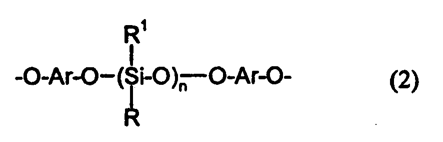 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A 3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als Komponente C) enthalten die Zusammensetzungen erfindungsgemäß ein oder eine Mischung aus zwei oder mehr unterschiedlichen Pfropfpolymerisaten mit einer Pfropfgrundlage auf Basis von Acrylaten mit einer Glasübergangstemperatur von unter -5°C (solche Pfropfpolymerisate werden im allgemeinen als Acrylatkautschuke bezeichnet und sind dem Fachmann bekannt) oder ein oder eine Mischung aus zwei oder mehr unterschiedlichen elastischen Blockpolymeren, insbesondere Zwei- oder Dreiblockcopolymere auf Basis von Vinylaromaten und Dienen, oder Mischungen aus Pfropfpolymerisaten und elastischen Blockpolymeren.

Die erfindungsgemäße Komponente C) umfasst Pfropfcopolymerisate mit kautschukelastischen Eigenschaften, die im wesentlichen aus mindestens 2 der folgenden Monomeren erhältlich sind: (Meth)-Acrylsäureester mit 1 bis 18 C-Atomen in der Alkoholkomponente, Chloropren, Butadien-1,3, Isopropen, Styrol, Acrylnitril, Ethylen, Propylen und Vinylacetat, wobei die Pfropfbasis mindestens einen (Meth)Acrylsäureester enthält, also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind.

Bevorzugte Polymerisate C) sind partiell vernetzt und besitzen Gelgehalte von über 5 Gew.-%, bevorzugt 20 Gew.-%, vorzugsweise über 40 Gew.-%, insbesondere über 60 Gew.-%.

Bevorzugte Polymerisate C) sind Pfropfpolymerisate enthaltend
C.1) 95 bis 5, vorzugsweise 10 bis 80 Gew.-%, bezogen auf Komponente C, Pfropfauflage basierend auf mindestens einem polymerisierbaren, ethylenisch ungesättigten Monomeren als Pfropfmonomere und
C.2) 5 bis 95, vorzugsweise 20 bis 90 Gew.-%, bezogen auf Komponente C, Acrylatkautschuk mit einer Glasübergangstemperatur <-10°C, vorzugsweise <-20°C als Pfropfgrundlage.

Die Acrylatkautschuke gemäß C.2 sind vorzugsweise Polymerisate aus Acrylsäurealkylestern oder Meth-Acrylsäurealkylestern, gegebenenfalls mit bis zu 40 Gew.-%, bezogen auf C.2, anderen polymerisierbaren, ethylenisch ungesättigten Monomeren. Zu den bevorzugten Acrylsäureestern oder Meth-Acrylsäureestem gehören C₁-C₈-Alkylester, insbesondere Methyl-, Ethyl-, Butyl-, n-Octyl- und 2-Ethylhexylester; sowie Halogenalkylester, vorzugsweise Halogen-C₁-C₈-alkylester, wie Chlorethylacrylat, sowie Mischungen dieser Monomeren.

Acrylsäurealkylester und Methacrylsäureester sind vorzugsweise Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Pfropfmonomere der Pfropfauflage C.1. sind vorzugsweise ausgewählt aus mindestens einem Monomer, vorzugsweise 2 oder 3 Monomeren der Gruppe bestehend aus Styrol, α-Methylstyrol, halogen- oder methylkernsubstituierten Styrolen, (Meth)-Acrylsäure-C₁-C₈-alkylester, Acrylnitril, Methacrylnitril, Maleinsäureanhydrid, C₁-C₄-Alkyl- bzw. phenyl-N-substituierten Maleinimiden oder Mischungen hieraus.

Besonders bevorzugte Pfropfpolymerisate C) umfassen Pfropfpolymerisate aus:
C.1) 5 bis 95, vorzugsweise10 bis 80, insbesondere 30 bis 80 Gew.-Teile, einer Mischung aus
   C.1.1 50 bis 99, vorzugsweise 65 bis 90 Gew.-% Methylmethacrylat, Styrol, α-Methylstyrol, halogen- oder methylkernsubstituierten Styrolen oder Mischungen dieser Verbindungen und
   C.1.2 1 bis 50, vorzugsweise 35 bis 10 Gew.-% Methylmethacrylat, Acrylnitril, Methacrylnitril, Maleinsäureanhydrid, C₁-C₄-alkyl- bzw. -phenyl-N-substituierten Maleinimiden oder Mischungen dieser Verbindungen auf
C.2) 5 bis 95, vorzugsweise 20 bis 90, insbesondere 20 bis 70 Gew.-Teilen Polymerisat auf Alkylacrylat-Basis mit einer Glasübergangstemperatur unter -10°C, vorzugsweise kleiner -20°C,
wobei die Summe der Gewichtsteile aus C.1) und C.2) 100 ergibt.

Insbesonders sind Pfropfpolymerisate C) bevorzugt, die erhältlich sind durch Pfropfreaktion von
- α: 10 bis 70, vorzugsweise 15 bis 50, insbesondere 20 bis 40 Gew.-%, bezogen auf Pfropfpolymisat C, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage C.1 auf
- β: 30 bis 90, vorzugsweise 50 bis 85, insbesondere 60 bis 80 Gew.-%, bezogen auf Pfropfpolymerisat C), eine Pfropfgrundlage C.2), die 70 bis 100 Gew.-% mindestens eines Alkylacrylates mit 1 bis 8 C-Atomen im Alkyrest, vorzugsweise n-Butylacrylat und/oder Methyl-n-Butylacrylat und/oder 2-Ethylhexylacrylat, insbesondere n-Butylacrylat als alleiniges Alkylacrylat, 0 bis 30, vorzugsweise 0 bis 15 Gew.-% eines weiteren copolymerisierbaren monoethylenisch ungesättigten Monomeren, wie Butadien, Isopren. Styrol, Acrylnitril, Methylmethacrylat oder Vinylmethylether oder deren Mischungen, 0 bis 5 Gew.-% eines copolymerisierbaren, polyfunktionellen, vorzugsweise bi- und trifunktionellen, die Vernetzung bewirkenden Monomeren, wobei sich die Gewichtsangaben auf das Gesamtgewicht der Pfropfgrundlage beziehen.

Bevorzugte Pfropfpolymerisate C) sind z.B. mit (Meth)-Acrylsäurealkylestern und/oder Styrol und/oder Acrylnitril gepfropfte Grundlagen C.2). Acrylatkautschuke auf n-Butylacrylatbasis sind als Pfropfbasis C.2) besonders bevorzugt.

Besonders bevorzugte Pfropfpolymerisate C) sind insbesondere solche, die weniger als 5 Gew.-% Polystyroleinheiten, bevorzugt weniger als 1 Gew.-% Polystyroleinheiten bezogen auf das Gesamtgewicht des Pfropfes, insbesondere bevorzugt keine Polystyroleinheiten enthalten.

Die **Komponente C)** kann auch eine Mischung verschiedener Pfropfcopolymerisate sein.

Der Gelanteil der Pfropfgrundlage β beträgt im allgemeinen mindestens 20 Gew.-%, vorzugsweise 40 Gew.-% (in Toluol gemessen) und der Pfropfgrad G im allgemeinen 0,15 bis 0,55.

Der mittlere Teilchendurchmesser des Pfropfpolymerisats C) beträgt bevorzugt 0,01 bis 2 µm, besonders bevorzugt 0,1 bis 0,6, insbesondere 0,2 bis 0,4 µm.

Der mittlere Teilchendurchmesser wird beispielsweise an elektronenmikroskopischen Aufnahmen (TEM) von Ultra-Dünnschnitten der erfindungsgemäßen Formmassen, mit OsO₄ und RuO₄ behandelt, durch Ausmessen einer repräsentativen Menge (ca. 50) von Partikeln bestimmt.

Die mittlere Teilchengröße d₅₀ bestimmt mittels Ultrazentrifugation (W. Scholtan, H. Lange, Kolloid, Z. und Z. Polymere 250 (1972), 782-796) ist der Durchmesser oberhalb und unterhalb dessen jeweils 50 Gew.-% der Teilchen liegen. Die mittlere Teilchengröße d₅₀ der Pfropfpolymerisate C) beträgt bevorzugt 0,1 bis 0,6 µm.

Der Gelgehalt der Pfropfgrundlage C.2 wird bei 25°C in Dimethylformamid bestimmt (M. Hoffinann, H. Krömer, R. Kuhn, Polymeranalytik I und II, Georg Thieme-Verlag, Stuttgart 1977).

Der Pfropfgrad G bezeichnet das Gewichtsverhältnis von aufgepfropften Pfropfmonomeren zur Pfropfgrundlage und ist dimensionslos.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat. Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen. Besonders bevorzugte vernetzende Monomere sind die cyclischen Monomere Triallylcyanurat, Triallylisocyanurat, Trivinylcyanurat, Triacryloylhexahydro-s-triazin, Triallylbenzole, Acrylsäureester des Tricyclodecenylalkohols.

Die Menge der vemetzenden Monomere beträgt vorzugsweise 0,02 bis 5, insbesondere 0,05 bis 2 Gew.-%, bezogen auf die Pfropfgrundlage C.2.

Bei cyclischen vernetzenden Monomeren mit mindestens 3 ethylenisch ungesättigten Gruppen ist es vorteilhaft, die Menge auf unter 1 Gew.-% der Pfropfgrundlage C.2 zu beschränken.

Die Pfropfpolymerisate C) können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C) auch solche Produkte verstanden, die durch Polymerisation der Pfropfmonomere in Gegenwart der Pfropfgrundlage gewonnen werden.

Die Pfropfpolymerisate C) werden bevorzugt in kompaktierter Form eingesetzt.

Die erfindungsgemäße Komponente C umfasst weiterhin Blockpolymere mit kautschukelastischen Eigenschaften, insbesondere zum Beispiel Zwei- (A-B) und Dreiblockcopolymere (A-B-A). Blockcopolymere des Typs A-B und A-B-A können typisches Verhalten thermoplastischer Elastomere zeigen. Die bevorzugten Blockcopolymere des Typs A-B und A-B-A enthalten ein oder zwei vinylaromatische Blöcke (vorzugsweise basierend auf Styrol) und einen Kautschuk-Block (vorzugsweise ein Dien-Kautschuk-Block, insbesondere Polybutadien-Block oder Isopren-Block) die gegebenenfalls teilweise oder vollständig hydriert sein können.

Geeignete Blockcopolymere des Typs A-B und A-B-A sind z.B. beschrieben in US-A 3 078 254, 3 402 159, 3 297 793, 3 265 765 und 3 594 452 und in GB-A 1 264 741. Beispiele typischer Blockcoplymere des Typs A-B und A-B-A sind: Polystyrol-Polybutadien (SBR), Polystyrol-Poly(ethylen-propylen), Polystyrol-Polyisopren, Poly(α-Methylstyrol)-Polybutadien, Polystyrol-Polybutadien-Polystyrol (SBR), Polystyrol-Poly(ethylen-propylen)-Polystyrol, Polystyrol-Polyisopren-Polystyrol und Poly(α-Methylstyrol)-Polybutadien-Poly(α-Methylstyrol), sowie hydrierte Versionen davon wie zum Beispiel und bevorzugt hydriertes Polystyrol-Polybutadien-Polystyrol (SEBS) und hydriertes Polystyrol-Polyisopren (SEP). Die Verwendung entsprechender hydrierter Blockcopolymerisate gegebenenfalls im Gemisch mit der nicht hydrierten Vorstufe als Schlagzähmodifier ist beispielweise beschrieben in DE-A2750515, DE-A 2434848, DE-A 038551, EP-A 0 080 666 und WO 83/01254. Auf die Offenbarung der genannten Druckschriften wird hiermit ausdrücklich Bezug genommen.

Mischungen der erwähnten Blockpolymere können ebenfalls eingesetzt werden.

Besonders bevorzugt sind teilweise oder vollständig hydrierte Blockcopolymere, insbesondere bevorzugt sind hydriertes Polystyrol-Polybutadien-Polystyrol (SEBS) und hydriertes Polystyrol-Polyisopren (SEP).

Solche Blockpolymere des Typs A-B und A-B-A sind kommerziell aus einer Reihe von Quellen erhältlich, wie z.B. von Phillips Petroleum unter dem Handelsnamen SOLPRENE, von Shell Chemical Co. unter dem Handelsnamen KRATON, von Dexco unter dem Handelsnamen VECTOR und von Kuraray unter dem Handelsnamen SEPTON.

Als **Komponente D** enthalten die thermoplastischen Formmassen erfindungsgemäß ein oder eine Mischung aus zwei oder mehr unterschiedlichen mineralischen Füllstoffen auf Basis von Talk mit einer oberen Korngröße d₉₇ kleiner 50 µm. Im Falle dass Komponente C ein Blockcopolymer ist, enthalten die Blends den mineralischen Füllstoff insbesondere in einer Menge von 1,5 bis 34, ganz besonders bevorzugt in einer Menge von 1,5 bis 25 Gew.-Teilen.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen.

Die mineralischen Füllstoffe können auch oberflächenbehandelt sein. Sie können mit einem geeigneten Schlichtesystem, das zum Beispiel einem Haftvermittler bzw. Haftvermittlersystem z.B. auf Silanbasis enthält, ausgerüstet sein.

Die teilchenförmigen Füllstoffe haben bevorzugt eine obere Teilchen- bzw. Korngröße d₉₇ kleiner 25, besonders bevorzugt kleiner 10 und insbesondere bevorzugt kleiner 6 *µ*m. Als mittlere Korngröße d₅₀ wird bevorzugt ein Wert kleiner 10, bevorzugt kleiner 6, besonders bevorzugt kleiner 2 und insbesondere bevorzugt kleiner 1 *µ*m gewählt. Die d₉₇- und d₅₀-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Die Füllstoffe können bedingt durch die Verarbeitung zur Formmasse bzw. Formkörper in der Formmasse bzw. im Formkörper einen kleineren d₉₇- bzw. d₅₀-Wert aufweisen als die ursprünglich eingesetzten Füllstoffe.

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

Die erfindungsgemäßen Zusammensetzungen können weiterhin übliche Zusatzstoffe enthalten, die im allgemeinen bis 15, vorzugsweise in einer Menge von 0,01 bis 10, besonders bevorzugt 0,05 bis 5, insbesondere bevorzugt 0,1 bis 3 Gew.-%, bezogen auf das Gesamtgewicht der Formmassen, zugesetzt werden können.

Alle üblichen Additive wie z.B. Stabilisatoren (zum Beispiel UV-Stabilisatoren, Thermostabilisatoren), Antistatika, Fließhilfsmittel, Entformungsmittel, Brandschutzadditive, Emulgatoren, Nukleierungsmittel, Weichmacher, Gleitmittel, pH-Wert erniedrigende Additive (z.B. Carboxylgruppen enthaltende Verbindungen), Additive zur Erhöhung der Leitfähigkeit, Farbstoffe und Pigmente kommen infrage. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden. Die Additive können zugemischt und/oder auf die Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Pigmente können z.B. Titandioxid, Ultramarinblau, Eisenoxid, Russ, Phthalocyanine, Chinacridone, Perylene, Nigrosin und Anthrachinone eingesetzt werden.

Als Nukleierungsmittel können z.B. Natriumphenylphosphinat, Aluminiumoxid, Siliziumdioxid sowie bevorzugt Talkum und die weiter vorne beschriebenen Nukleierungsmittel eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Um leitfähige Formmassen zu erhalten, können Russe, Leitfähigkeitsrusse, Carbonfibrillen, nanoskalige Graphitfasern (Nanotubes), Graphit, leitfähige Polymere, Metallfasern sowie andere übliche Additive zur Erhöhung der Leitfähigkeit zugesetzt werden.

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-OS 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO98/17720 (PCT/EP/05705) geeignet, z.B. Triphenylphosphat (TPP), Resorcinol-bis-(diphenylphosphat) einschließlich Oligomere sowie Bisphenol-A-bis-diphenylphosphat einschließlich Oligomere (vgl. z.B. EP-A 363 608 und EP-A 640 655), Melaminphosphat, Melaminpyrophosphat, Melaminpolyphosphat und deren Mischungen. Als Stickstoffverbindungen kommen insbesondere Melamin und Melamincyanurat infrage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und und Tetrafluorethylenpolymerisate können zugesetzt werden. Die Flammschutzmittel, gegebenenfalls mit einem Synergisten, wie Antimonverbindungen, und Antidripping-Mittel werden im allgemeinen bis zu einer Menge von 30, vorzugsweise 20 Gew.-% (bezogen auf die Gesamtzusammensetzung) eingesetzt.

Als Zusatzstoffe können auch Verstärkungsstoffe z.B. in Form von Glasfasern zugesetzt werden.

Gegenstand der Erfindung sind weiterhin ein Verfahren zur Herstellung der Zusammensetzungen, die Verwendung der erfindungsgemäßen Zusammensetzung zur Herstellung von Halbzeugen und Formteilen sowie daraus hergestellte Halbzeuge und Formteile.

Die Herstellung der erfindungsgemäßen Zusammensetzungen erfolgt nach an sich bekannten Verfahren durch Mischen der Komponenten. Es kann vorteilhaft sein, einzelne Komponenten vorzumischen. Vorzugsweise geschieht das Mischen der Komponenten A bis D sowie weiterer Bestandteile bei Temperaturen von 220 bis 330°C durch gemeinsames Kneten, Extrudieren oder Verwalzen der Komponenten.

Die erfindungsgemäßen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Die Formteile können klein- oder großteilig sein und für Außen- oder Innenanwendungen eingesetzt werden. Bevorzugt werden großteilige Formteile für den Fahrzeugbau, insbesondere den Automobilsektor hergestellt. Insbesondere können aus den erfindungsgemäßen Formmassen Karosserieaußenteile wie z.B. Kotflügel, Heckklappen, Motorhauben, Stoßstangen, Ladeflächen, Abdeckungen für Ladeflächen, Autodächer oder andere Karosserieanbauteile gefertigt werden.

Formteile bzw. Halbzeuge aus den erfindungsgemäßen Formmassen/Zusammensetzungen können sich auch im Verbund mit weiteren Werkstoffen wie z.B. Metall oder Kunststoff befinden. Nach einer eventuellen Lackierung von z.B. Karosserieaußenteilen können sich Lackschichten direkt auf den erfindungsgemäßen Formmassen und/oder auf den im Verbund eingesetzten Werkstoffen befinden. Die erfindungsgemäßen Formmassen bzw. die Formteile/Halbzeuge aus den erfindungsgemäßen Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkststoffen oder sich selbst für die Herstellung von Fertigteilen wie z.B. Karosserieaußenteilen eingesetzt werden.

Die erfindungsgemäßen Formmassen können auch für zahlreiche weitere Anwendungen verwendet werden. Beispielsweise seien genannt die Verwendung in der Elektrotechnik, im Bausektor oder in der Datenspeicherung. In den genannten Einsatzgebieten können Formteile aus den erfindungsgemäßen Formmassen zum Beispiel als Lampenabdeckungen, als Spulenkörper, als Sicherheitsscheiben, als Gehäusematerial für elektronische Geräte, als Gehäusematerial für Haushaltsgeräte, als Platten zur Herstellung von Abdeckungen verwendet werden.

Die erfindungsgemäßen Zusammensetzungen zeichnen sich durch eine ausgezeichnete Wärmeformbeständigkeit und Wärmeformstabilität aus. Die erfindungsgemäßen Zusammensetzungen weisen zusätzlich einen unerwartet niedrigen Abfall der Schlagzähigkeit bei tiefen Temperaturen auf. Darüber hinaus erfüllen sie hohe Anforderungen hinsichtlich Verarbeitungsstabilität, Fließfähigkeit der Schmelze, Zähigkeit, Tieftemperaturzähigkeit, Steifigkeit, thermische Ausdehnung, Oberflächenqualität, Lackierbarkeit, Chemikalienbeständigkeit und Kraftstoffbeständigkeit.

### Beispiele

### Komponente A

Polyethylenterephthalat Typ 1: Es handelt sich um Polyethylenterephthalat mit einer intrinsischen Viskosität IV von ca. 0,69 cm³/g und einer isothermen Kristallisationszeit bei 215°C von ca. 7 Minuten.

Polyethylenterephthalat Typ 2: Es handelt sich um Polyethylenterephthalat mit einer intrinsischen Viskosität IV von ca. 0,73 cm³/g und einer isothermen Kristallisationszeit bei 215°C von ca. 3 Minuten.

Die intrinsische Viskosität wird gemessen in Phenol/o-Dichlorbenzol (1:1 Gew.-Teile) bei 25°C.

Die Bestimmung der isothermen Kristallisationszeit von PET mit der DSC-Methode (differential scanning calometry) erfolgt mit einem PERKIN ELMER DSC 7 Differential Scanning Calometer (Einwaage ca. 10 mg, gelochtes Al-Pfännchen) mit folgendem Temperaturprogramm:
1. Aufheizen von 30°C bis 290°C mit 40°C/min,
2. 5 min. isotherm bei 290°C,
3. Kühlen von 290°C auf 215°C mit 160°C/min,
4. 30 min isotherm bei 215°C (Kristallisationstemperatur).
Die Auswertungssoftware ist PE Thermal Analysis 4.00.

### Komponente B

Lineares Polycarbonat (Makrolon 2805 von Bayer AG, Leverkusen, Deutschland) auf Basis Bisphenol A mit einer Viskosität ηrel. von ca. 1,29 (Messbedingungen: 5 g Polycarbonat pro Liter Methylenchlorid, 25°C) und einem Molekulargewicht Mw von ca. 29 000 g/mol (bestimmt mit GPC-Methoden gegen Polycarbonatstandard).

### Komponente C

Bei dem verwendeten Acrylat-Pfropfpolymerisat handelt es sich um Paraloid EXL 2300 von Rohm und Haas Deutschland GmbH, Frankfurt.

Bei den verwendeten Blockcopolymeren handelt es sich um Kraton G 1651 (SEBS, Typ 1) und Kraton G 1702 (SEP, Typ 2) von Shell Chemical.

### Komponente D

- Talk Typ 1:: Es handelt sich um Tital 5 der Incemin AG (Schweiz) mit einem d₅₀-Wert von ca. 0,9 µm und einem d₉₇-Wert von kleiner 5 µm.
- Talk Typ 2:: Es handelt sich um Naintsch A 10 der Naintsch Mineralwerke (Österreich) mit einem d₅₀-Wert von ca. 2,2 µm und einem d₉₇-Wert von kleiner 10 µm.
- Talk Typ 3:: Es handelt sich um Naintsch A 60 der Naintsch Mineralwerke (Österreich) mit einem d₅₀-Wert von ca. 12 µm und einem d₉₇-Wert von kleiner 80 µm.

Die d₅₀- und d₉₇-Werte wurden aus Korngrößenverteilungsmessungen nach Sedigraph 5000 D bzw. Siebanalyse DIN 66 165 bestimmt.

Als Additive wurden übliche Stabilisatoren, Nukleierungsmittel und Entformungsmittel verwendet.

Compoundierungen erfolgten auf einem Zweiwellenextruder des Typs ZSK32 (Werner und Pfleiderer) bei Massetemperaturen von 250 bis 290°C.

Die Prüfkörper wurden auf einer Spritzgießmaschine des Typs Arburg 320-210-500 bei Massetemperaturen von 260 bis 280°C und Werkzeugtemperaturen von 70 bis 90°C verspritzt.

Die Ausprüfungen der erfindungsgemäßen Formmassen erfolgte nach folgenden Methoden:
Vicat B: Wärmefonnstabilität bzw. Wärmevormbeständigkeit nach DIN ISO 306/B 120 in Silikonöl.
HDT A: Wärmeformstabilität bzw. Wärmeformbeständigkeit nach DIN ISO 75-2 Methode Af.
Izod-Schlagzähigkeit: Zähigkeit nach ISO 180 Methode 1 U.
Zugmodul: Steifigkeit nach DIN / EN / ISO 527-2/1A.
Reißdehnung: Dehnbarkeit bestimmt nach DIN/EN/ISO 527-2/1A.
Thermischer Längenausdehnungskoeffizient: Bestimmt nach DIN 53 752/B im Temperaturbereich von 0 bis 55°C.
MVR: Fließfähigkeit nach DIN/ISO 1133 bei 280°C und 2,16 kg.
Oberflächenqualität: Bestimmung der Oberflächenqualität durch optische Begutachtung. ++ bedeutet eine ansprechende, glatte Oberfläche, die sehr gut lackierbar ist.

Zusammensetzung und Eigenschaften der erfindungsgemäßen thermoplastischen Formmassen gehen aus den Tabellen 1 bis 5 hervor.

Aus den Tabellen 1 bis 5 geht hervor, dass die erfindungsgemäßen Formmassen eine ausgezeichnete Wärmeformbeständigkeit/Wärmeformstabilität (Vicat B, HDT A) aufweisen und einen unerwartet niedrigen Abfall der Schlagzähigkeit bei niedrigen Temperaturen (Izod-Schlagzähigkeit) zeigen.

Darüber hinaus erfüllen sie die an thermoplastische Formmassen für großflächige Karosserieaußenteile gestellten Anforderungen im Bezug auf Steifigkeit (Zugmodul), Dehnbarkeit (Reißdehnung), thermische Ausdehnung (linearer thermischer Ausdehnungskoeffizient), Fließfähigkeit in der Schmelze (MVR) und Lackierbarkeit (Oberflächenqualität).

**Tabelle 1**

| Beispiel | | 1 | 2 | 3 |
|---|---|---|---|---|
| Polycarbonat | [%] | 40 | 40 | 40 |
| Polyethylenterephthalat,Typ2 | [%] | 29,2 | 24,2 | 19,2 |
| Pfropfkautschuk | [%] | 10 | 15 | 20 |
| Talk, Typ1 | [%] | 20 | 20 | 20 |
| Additive | [%] | 0.8 | 0,8 | 0,8 |
| Vicat B | [°C] | 143 | 140 | 134 |
| HDT A | [°C] | 111 | 111 | 109 |
| Izod-Schlagzähigkeit 23°C | [kJ/m²] | 77 | 116 | 119 |
| Izod-Schlagzähigkeit-10°C | [kJ/m²] | 80 | 67 | 123 |
| Izod-Schlagzähigkeit -20°C | [kJ/m²] | 70 | 69 | 92 |
| Zugmodul | [MPa] | 4500 | 3940 | 3560 |
| Reißdehnung | [%] | 8 | 14 | 13 |
| Thermischer Längenausdehnungskoeffizient (l/q) | [10^-6/K] | 54/84 | 44/76 | 41/66 |
| MVR(280°C/2,16 k | [cm³/10min] | 9 | 4 | 2 |
| Oberflächenqualität | | ++ | ++ | ++ |

| | | | | |
|---|---|---|---|---|
| l/q = längs/quer n.g. = nicht gebrochen | | | | |

**Tabelle 2**

| Beispiel | | 4 | 5 | 6 | 7 |
|---|---|---|---|---|---|
| Polycarbonat | [%] | 50 | 50 | 50 | 50 |
| Polyethylenterephthalat, Typ 1 | [%] | 27,1 | 22,1 | 17,1 | 12,1 |
| Pfropfkautschuk | [%] | 12 | 12 | 12 | 12 |
| Talk, Typ 1 | [%] | 10 | 15 | 20 | 25 |
| Additive | [%] | 0,9 | 0,9 | 0,9 | 0,9 |
| Vicat B | [°C] | 140 | 142 | 140 | 138 |
| HDT A | [°C] | 101 | 106 | 118 | 120 |
| Izod-Schlagzähigkeit 23°C | [kJ/m²] | n.g. | 49 | 62 | 81 |
| Izod-Schlagzähigkeit -10°C | [kJ/m²] | - | 59 | 59 | 87 |
| Izod-Schlagzähigkeit-20°C | [kJ/m²] | n.g. | 53 | 62 | 55 |
| Zugmodul | [MPa] | 3000 | 3630 | 4040 | 4190 |
| Reißdehnung | [%] | 47 | 6 | 8 | 7 |
| Thermischer Längenausdehnungskoeffizient (l/q) | [10^-6/K] | 59/85 | 54/76 | 48/81 | 47/72 |
| MVR (280°C/2,16 kg) | [cm³/10min] | 12 | 15 | 5 | 3 |
| Oberflächenqualität | | ++ | ++ | ++ | ++ |

| | | | | | |
|---|---|---|---|---|---|
| l/q = längs/quer n.g. = nicht gebrochen | | | | | |

**Tabelle 3**

| Beispiel | | 8 | 9 | 10 |
|---|---|---|---|---|
| Polycarbonat | [%] | 40 | 40 | 40 |
| Polyethylenterephthalat, Typ 1 | [%] | 37,1 | 32,1 | 27,1 |
| Pfropfkautschuk | [%] | 12 | 12 | 12 |
| Talk, Typ 1 | [%] | 10 | 15 | 20 |
| Additive | [%] | 0,9 | 0,9 | 0,9 |
| Vicat B | [°C] | 140 | 141 | 140 |
| HDT A | [°C] | 98 | 103 | 111 |
| Izod-Schlagzähigkeit 23°C | [kJ/m²] | n.g. | 174 | 58 |
| Izod-Schlagzähigkeit -10°C | [kJ/m²] | 167 | 87 | 56 |
| Izod-Schlagzähigkeit -20°C | [kJ/m²] | 156 | 93 | 62 |
| Zugmodul | [MPa] | 3090 | 3610 | 4140 |
| Reißdehnung | [%] | 22 | 20 | 8 |
| Thermischer Längenausdehnungskoeffizient (l/q) | [10^-6/K] | 73/81 | 69/78 | 50/71 |
| MVR(280°C/2,16 kg) | [cm²/10min] | 16 | 12 | 9 |
| Oberflächenqualität | | ++ | ++ | ++ |

| | | | | |
|---|---|---|---|---|
| l/q = längs/quer n.g. = nicht gebrochen | | | | |

**Tabelle 4**

| Beispiel | | 11 | 12 | 13 |
|---|---|---|---|---|
| Polycarbonat | [%] | 30 | 30 | 30 |
| Polyethylenterephthalat, Typ 1 | [%] | 47,1 | 42,1 | 37,1 |
| Pfropfkautschuk | [%] | 12 | 12 | 12 |
| Talk, Typ 1 | [%] | 10 | 15 | 20 |
| Additive | [%] | 0,9 | 0,9 | 0,9 |
| Vicat B | [°C] | 142 | 142 | 141 |
| HDT A | [°C] | 90 | 93 | 106 |
| Izod-Schlagzähigkeit 23°C | [kJ/m²] | 73 | 67 | 24 |
| Izod-Schlagzähigkeit -10°C | [kJ/m²] | 66 | 63 | 32 |
| Izod-Schlagzähigkeit -20°C | [kJ/m²] | 63 | 57 | 33 |
| Zugmodul | [MPa] | 3140 | 3680 | 4300 |
| Reißdehnung | [%] | 8 | 5 | 3 |
| Thermischer Längenausdehnungskoeffizient (l/q) | [10^-6/K] | 66/90 | 62/60 | 48/72 |
| MVR (280°C/2,16 kg) | [cm³/10min] | 22 | 17 | 12 |
| Oberflächenqualität | ++ | ++ | ++ | ++ |

| | | | | |
|---|---|---|---|---|
| l/q = Längs/quer n.g. = nicht gebrochen | | | | |

**Tabelle 5**

| Beispiel | | 14 | 15 | 16 Vergl. | 17 | 18 | 19 Vergl. |
|---|---|---|---|---|---|---|---|
| Polycarbonat | [%] | 50 | 50 | 50 | 50 | 50 | 50 |
| Polyethylenterephthalat Typ 1 | [%] | 27,2 | 27,2 | 27,2 | -- | -- | -- |
| Polyethyleneterephthalat Typ 2 | [%] | - | - | - | 27,2 | 27,2 | 27,2 |
| Pfropfkautschuk | [%] | 12 | 12 | 12 | 12 | 12 | 12 |
| Talk, Typ 1 | [%] | 10 | -- | -- | 10 | -- | -- |
| Talk, Typ 2 | [%] | -- | 10 | -- | -- | 10 | -- |
| Talk, Typ 3 | [%] | -- | -- | 10 | -- | -- | 10 |
| Additive | [%] | 0,8 | 0,8 | 0,8 | 0,8 | 0,8 | 0,8 |
| Vicat B | [°C] | 140 | 140 | 138 | 139 | 139 | 138 |
| HDT A | [°C] | 107 | - | - | 105 | - | - |
| Izod-Schlagzähigkeit 23°C | [kJ/m²] | n.g. | n.g. | 166 | n.g. | n.g. | n.g. |
| Izod-Schlagzähigkeit-10°C | [kJ/m²] | -- | 286 | -- | -- | -- | -- |
| Izod-Schlagzähigkeit-20°C | [kJ/m²] | n.g. | 198 | 122 | n.g. | n.g. | 127 |
| Zugmodul | [MPa] | 3020 | 3040 | 3040 | 3020 | 2990 | 2990 |
| Reißdehnung | [%] | 43 | 33 | 15 | 38 | 44 | 19 |
| MVR (280°C/2,16 kg) | [cm³/10min] | 11 | 10 | 11 | 7 | 8 | 8 |
| Oberflächenqualität | | ++ | ++ | ++ | ++ | ++ | ++ |

| | | | | | | | |
|---|---|---|---|---|---|---|---|
| n.g. = nicht gebrochen | | | | | | | |

**Tabelle 6**

| Beispiel | | 20 | 21 | 22 | 23 | 24 |
|---|---|---|---|---|---|---|
| Polycarbonat | [%] | 47 | 47 | 50 | 50 | 43 |
| Polyethylenterephthalat, Typ 2 | [%] | 34,2 | 34,2 | 37,2 | 26,9 | 21,3 |
| Blockcopolymer, Typ 1 | [%] | 12 | 0 | 12 | 0 | 15 |
| Blockcopolymer, Typ 2 | [%] | 0 | 12 | 0 | 12 | 0 |
| Talk, Typ 1 | [%] | 3 | 3 | 10 | 10 | 20 |
| Additive | [%] | 0,8 | 0,8 | 0,8 | 1,1 | 0,7 |
| Vicat B | [°C] | 136 | 133 | 140 | 138 | 140 |
| HDT A | [°C] | 90 | 95 | 107 | 108 | 112 |
| Izod-Schlagzähigkeit 23°C | [kJ/m²] | n.g. | n.g. | n.g. | n.g. | 92 |
| Izod-Schlagzähigkeit-10°C | [kJ/m²] | n.g. | n.g. | n.g. | n.g. | 79 |
| Izod-Schlagzähigkeit -20°C | [kJ/m²] | n.g. | n.g. | n.g. | n.g. | 76 |
| Zugmodul | [MPa] | 2200 | 2190 | 2900 | 2900 | 3940 |
| Reißdehnung | [%] | 110 | 120 | 50 | 54 | 9 |
| Thermischer Längenausdehnungskoeffizient (l/g) | [10^-6/K] | - | - | 71/82 | - | 53/65 |
| MVR(300°C/2,16 kg) | [cm³/10min] | 24 | 27 | 21 | 24 | 11 |
| Oberflächenqualität | | ++ | ++ | ++ | ++ | ++ |

| | | | | | | |
|---|---|---|---|---|---|---|
| l/q = längs/quer n.g. - nicht gebrochen | | | | | | |

## Patentansprüche

1. Zusammensetzung enthaltend
A) 4 bis 80 Gew.-Teile mindestens ein Polyethylenterephthalat,
B) 10 bis 90 Gew.-Teile mindestens ein aromatisches Polycarbonat,
C) 1,5 bis 30 Gew.-Teile mindestens ein Pfropfpolymerisat mit einer Pfropfgrundlage auf Basis von Acrylaten mit einer Glasübergangstemperatur von unter -5°C oder Mischungen aus Pfropfpolymerisat und Blockcopolymer, und
D) 1,5 bis 54 Gew.-Teile mindestens einen mineralischen Füllstoff auf Basis von Talk mit einer oberen Korngröße d₉₇ kleiner 50 µm,
wobei die Summe der Gewichtsteile aller Komponenten 100 ergibt.

2. Zusammensetzung gemäß Anspruch 1, wobei der mineralische Füllstoff D) einen Gehalt an Talk von größer als 50 Gew.-% aufweist (bezogen auf die Gesamtmenge an Füllstoff D).

3. Zusammensetzung gemäß Anspruch 1 bis 2, wobei Komponente D) eine mittlere Korngröße d₅₀ kleiner10 µm aufweist.

4. Zusammensetzung nach einem oder mehreren der vorhergehenden Ansprüche enthaltend größer 10 bis 60 Gew.-Teile mindestens ein Polyethylenterephthalat.

5. Zusammensetzung nach einem oder mehreren der vorhergehenden Ansprüche enthaltend 12 bis 40 Gew.-Teile mindestens ein Polyethylenterephthalat.

6. Zusammensetzung nach einem oder mehreren der vorhergehenden Ansprüche enthaltend 19 bis 29 Gew.-Teile mindestens ein Polyethylenterephthalat.

7. Zusammensetzung nach einem oder mehreren der vorhergehenden Ansprüche enthaltend 20 bis 80 Gew.-Teile mindestens ein aromatisches Polycarbonat.

8. Zusammensetzung nach einem oder mehreren der vorhergehenden Ansprüche enthaltend 3 bis 25 Gew.-Teile Pfropfpolymerisat.

9. Zusammensetzung nach einem oder mehreren der vorhergehenden Ansprüche enthaltend 3 bis 34 Gew.-Teile mindestens einen Füllstoff gemäß Komponente D).

10. Zusammensetzung nach einem oder mehreren der vorhergehenden Ansprüche enthaltend als Komponente C) Pfropfpolymerisate aus
C.1) 95 bis 5 Gew.-%, bezogen auf Komponente C), Pfropfauflage basierend auf mindestens einem polymerisierbaren, ethylenisch ungesättigten Monomeren als Pfropfmonomere und
C.2) 5 bis 95 Gew.-%, bezogen auf Komponente C), Acrylatkautschuk mit einer Glasübergangstemperatur <-10°C als Pfropfgrundlage.

11. Zusammensetzung gemäß Anspruch 10, wobei C.2) Polymerisate aus Acrylsäureestern oder Methacrylsäureestern, die bis zu 40 Gew.-%, bezogen auf C.2) andere ethylenisch ungesättigte Monomere enthalten können.

12. Formteile oder Halbzeuge, erhältlich aus Zusammensetzungen gemäß der Ansprüche 1 bis 10.

13. Karosserieaußenteile oder Karosserieanbauteile gemäß Anspruch 12.

## Claims

1. Composition containing
A) 4 to 80 parts by weight of at least one polyethylene terephthalate,
B) 10 to 90 parts by weight of at least one aromatic polycarbonate,
C) 1.5 to 30 parts by weight of at least one graft polymer having a grafting base based on acrylates with a glass transition temperature of less than -5°C or mixtures of graft polymer and block copolymer, and
D) 1.5 to 54 parts by weight of at least one mineral filler based on talc having an upper particle size d₉₇ of less than 50 µm,
the sum of the parts by weight of all components being 100.

2. Composition according to Claim 1, the mineral filler D) having a talc content greater than 50% by weight (based on the total amount of filler D).

3. Composition according to Claims 1 and 2, component D) having a median particle size d₅₀ of less than 10 µm.

4. Composition according to one or more of the preceding claims, containing more than 10 to 60 parts by weight of at least one polyethylene terephthalate.

5. Composition according to one or more of the preceding claims, containing 12 to 40 parts by weight of at least one polyethylene terephthalate.

6. Composition according to one or more of the preceding claims, containing 19 to 29 parts by weight of at least one polyethylene terephthalate.

7. Composition according to one or more of the preceding claims, containing 20 to 80 parts by weight of at least one aromatic polycarbonate.

8. Composition according to one or more of the preceding claims, containing 3 to 25 parts by weight of graft polymer.

9. Composition according to one or more of the preceding claims, containing 3 to 34 parts by weight of at least one filler according to component D).

10. Composition according to one or more of the preceding claims, containing, as component C), graft polymers of
C.1) 95 to 5% by weight, based on component C), of grafting base based on at least one polymerizable, ethylenically unsaturated monomer as graft monomer and
C.2) 5 to 95% by weight, based on component C), of acrylate rubber having a glass transition temperature of <-10°C as grafting base.

11. Composition according to Claim 10, C.2) being polymers of acrylates or methacrylates which may contain up to 40% by weight, based on C.2), of other ethylenically unsaturated monomers.

12. Shaped articles or semi-finished products, obtainable from compositions according to Claims 1 to 10.

13. Exterior bodywork parts or add-on bodywork parts according to Claim 12.

## Revendications

1. Composition contenant
A) 4 à 80 parties en poids d'au moins un poly(téréphtalate d'éthylène),
B) 10 à 90 parties en poids d'au moins un polycarbonate aromatique,
C) 1,5 à 30 parties en poids d'au moins un polymère greffé présentant un substrat de greffage à base d'acrylates présentant une température de transition vitreuse inférieure à -5°C ou des mélanges de polymère greffé et de copolymère à blocs, et
D) 1,5 à 54 parties en poids d'au moins une charge minérale à base de talc avec une grosseur de particules supérieure d₉₇ inférieure à 50 µm,
la somme des parties en poids de tous les composants étant égale à 100.

2. Composition selon la revendication 1, la charge minérale D) présentant une teneur en talc supérieure à 50% en poids (par rapport à la quantité totale de charge D).

3. Composition selon la revendication 1 à 2, le composant D) présentant une grosseur de particules moyenne d₅₀ inférieure à 10 µm.

4. Composition selon l'une ou plusieurs des revendications précédentes contenant plus de 10 à 60 parties en poids d'au moins un poly(téréphtalate d'éthylène).

5. Composition selon l'une ou plusieurs des revendications précédentes contenant 12 à 40 parties en poids d'au moins un poly(téréphtalate d'éthylène) .

6. Composition selon l'une ou plusieurs des revendications précédentes contenant 19 à 29 parties en poids d'au moins un poly(téréphtalate d'éthylène).

7. Composition selon l'une ou plusieurs des revendications précédentes contenant 20 à 80 parties en poids d'au moins un polycarbonate aromatique.

8. Composition selon l'une ou plusieurs des revendications précédentes contenant 3 à 25 parties en poids de polymère greffé.

9. Composition selon l'une ou plusieurs des revendications précédentes contenant 3 à 34 parties en poids d'au moins une charge selon le composant D).

10. Composition selon l'une ou plusieurs des revendications précédentes contenant comme composant C) des polymères greffés constitués par
C.1) 95 à 5% en poids, par rapport au composant C), de greffons à base d'au moins un monomère polymérisable éthyléniquement insaturé comme monomère de greffage et
C.2) 5 à 95% en poids, par rapport au composant C), de caoutchouc d'acrylate présentant une température de transition vitreuse <-10°C comme substrat de greffage.

11. Composition selon la revendication 10, C.2) pouvant contenir des polymères d'esters de l'acide acrylique ou d'esters de l'acide méthacrylique, qui peuvent contenir jusqu'à 40% en poids, par rapport à C.2) d'autres monomères éthyléniquement insaturés.

12. Pièces façonnées ou produits semi-finis, pouvant être obtenus à partir de compositions selon les revendications 1 à 10.

13. Pièces extérieures de carrosserie ou accessoires de carrosserie selon la revendication 12.
